## Europäisches Patentamt
### European Patent Office
### Office européen des brevets

(11) Publication number: **0 369 389**
**A1**

# EUROPEAN PATENT APPLICATION

(21) Application number: **89121043.7**

(22) Date of filing: **14.11.89**

(51) Int. Cl.5: **C08G 18/72, C08G 18/76, C08G 18/08, C08G 18/12, C09D 175/04**

(30) Priority: **15.11.88 US 271941**

(43) Date of publication of application:
**23.05.90 Bulletin 90/21**

(84) Designated Contracting States:
**AT BE CH DE ES FR GB GR IT LI LU NL SE**

(71) Applicant: **REICHHOLD CHEMICALS, INC.**
**525 North Broadway**
**White Plains, N.Y. 10603(US)**

(72) Inventor: **Long, David J.**
**233 Stuewe Rd**
**Getzville, NY 14068(US)**

(74) Representative: **Weber, Dieter, Dr. et al**
**Willrath Weber und Seiffert Postfach 6145**
**Gustav-Freytag-Strasse 25**
**D-6200 Wiesbaden 1(DE)**

(54) **Water dispersible poly(urethaneureas) prepared with diisocyanate blends.**

(57) A water-dispersible urethane prepolymer composition comprising a polyol chain including hydrophylic groups, said chain being extended by reaction with a blend of at least two isocyanates, said blend comprising at least five weight percent tetramethylxylylenediisocyanate. The prepolymer is characterized by a lower viscosity, at the same solids concentration, than similar prepolymers formed without the tetramethylxylylenediisocyanate in the isocyanate used for chain extension.

The invention also includes the cure prepolymer compositions and water dispersions of the prepolymer compositions.

EP 0 369 389 A1

# WATER DISPERSIBLE POLY(URETHANE-UREAS) PREPARED WITH DIISOCYANATE BLENDS

## BACKGROUND OF THE INVENTION

This invention relates to coating compositions and especially to polyurethane coating compositions in the form of aqueous dispersions.

Polyurethane prepolymers are formed by reaction of an isocyanate with an alcohol. In the prior art, such prepolymers have been used to form finished resin products, e.g., cured solid resins which may be in the form of coatings or other resin products. Such products may be formed by simple removal of solvent components and dispersing medium or by a combination of such removal in conjunction with curing by crosslinking or chain extension.

Polyurethane coating compositions are well known and are used to coat a variety of substrates. They provide fast curing characteristics, exhibit high abrasion resistance, flexibility, and good adhesion to the substrate as well as a high level of chemical resistance. These coatings may be formulated as solventless liquid two component systems, as solutions in a variety of solvents or as dispersions in a suitable liquid medium. Two component systems require careful blending of low molecular weight liquids and are difficult to use when high molecular weight end products are desired. While relatively high molecular weight urethane products can be dissolved in solvents such as certain heterocyclics and halogenated and unhalogenated aromatic and aliphatic hydrocarbons, such solvents are environmentally undesirable. Because of its environmental desirability, dispersions using water as the dispersing liquid medium are preferred, e.g. as described in U.S. Patent 4,066,591. That patent describes the formation of polyurethane aqueous dispersions by dispersing an isocyanate terminated prepolymer, which contains acid salt groups, in an aqueous medium and then reacting the prepolymer with an active hydrogen containing chain extender.

The prepolymers used in the manufacture of the aqueous urethane dispersions are made by condensing a relatively high molecular weight polyol, a diol containing one or more hydrophylic groups, such as carboxy groups or sulfonyl groups, and a polyisocyanate. The polyol component can be a polyester, polyether, polycarbonate or polycaprolactone, while the diol is preferably a carboxy containing diol such as dimethylolpropionic acid. Polyisocyanates which have been used to make such prepolymers can be of the aromatic or aliphatic types such as toluene diisocyanate, methylene bis(4-phenyl isocyanate), isophorone diisocyanate, hexamethylene diisocyanate or methylene bis(4-cyclohexyl iso-cyanate).

It has often been desirable to form such prepolymers at relatively high molecular weights, e.g. between 2,000 and 6,000 molecular weight, in order to optimize the physical properties of the finished resin product.

Unfortunately, such prepolymers of high molecular weight have had certain disadvantages. In particular, their high molecular weights often resulted in practically unmanageable viscosities unless large quantities of organic solvents were used. The use of large quantities of such solvents are undesirable for a number of reasons. The evaporation of such solvents into the atmosphere is an environmental concern; such solvents, especially in enclosed areas, are noxious and sometimes toxic; and such organic solvents are expensive and may require special handling, including costly disposal problems.

It is therefore an object of the present invention to provide a unique water dispersible urethane prepolymer which provides molecular weight properties comparable to prior art prepolymers at comparable solids level, yet exhibits a lower viscosity.

## BRIEF DESCRIPTION OF THE INVENTION

The water dispersible urethane prepolymer composition of the invention comprises a polyol chain extended by reaction with a blend of at least two isocyanates, said blend comprising at least five and preferably at least ten weight percent tetramethylxylylenediisocyanate (TMXDI).

The forgoing unique urethane prepolymer of the invention provides physical properties and molecular weights comparable to prior art urethane prepolymers at comparable solids loading yet, under essentially the same solution conditions, has a lower viscosity. Alternatively, the prepolymer of the invention can be utilized at increased solids or at higher molecular weights while maintaining a viscosity similar to prior art prepolymer viscosities used at lower solids or lower molecular weights. As a further and important alternative, the prepolymer of the present invention can be dispersed in water with less organic solvent while maintaining a practical viscosity.

## DETAILED DESCRIPTION OF THE INVENTION

The invention includes the cured prepolymer compositions and water dispersions of the prepolymer compositions.

"Water dispersible" as used herein means capable of forming a stable dispersion in water which may or may not require the presence of a cosolvent or dispersion aid such as an alcohol, e.g., isopropanol or butanol, a heterocyclic compound, such as N-methyl, pyrrolidone, butyrolactan or dimethyl formamide; or an amine such as triethanolamine.

"Prepolymer" as used herein means a polymer which is intended to be used as an intermediate in the formation of higher molecular weight polymers than the prepolymer by cross-linking or chain extension. Prepolymers in accordance with the present invention usually have a molecular weight of between 2,000 and 6,000 or higher. It is to be understood that a prepolymer is in itself a polymer or resin even though the prepolymer is intended for use in making even higher molecular weight polymers or resins.

The blend in a preferred embodiment, in addition to the TMXDI, includes at least fifty weight percent of an isocyanate selected from the group consisting of bis(4-isocyanato-cyclohexyl) methane ($H_{12}$MDI), isophorone diisocyanate (IPDI) and mixtures thereof and most desirably the blend consists essentially of from five to fifty weight percent tetramethylxylylenediisocyanate and from fifty to ninety-five weight percent bis(4-isocyanato-cyclohexyl) methane.

The prepolymers of the invention may be used to form aqueous dispersions having a wide range of resin concentration, e.g., from 5 to 60% prepolymer in water and preferably from 10 to 50% prepolymer in water.

The foregoing invention may be illustrated by but not limited by the following examples. Unless otherwise indicated all parts and percentages are by weight.

## EXAMPLE I

A poly(urethane-urea) dispersion was prepared as follows: an NCO containing prepolymer was prepared by charging a reaction flask with 128 parts by weight (pbw) of a 2000 molecular weight poly(1,6-hexanediol/neopentyl glycol adipate), 35 pbw of 1,4-cyclohexanedimethanol, 17 pbw of dimethylolpropionic acid, 0.8 pbw of diphenylisodecyl phosphite, 177 pbw of N-methyl pyrrolidone, and 141 pbw of bis (4-isocyanato-cyclohexyl) methane ($H_{12}$MDI), commercially available from Mobay Corporation as Desmodur W.

The reaction mixture was heated under a nitrogen atmosphere at 130° C for 1 hour then cooled to room temperature. The prepolymer was determined to have 1.8% by weight unreacted NCO groups, contain 66.7% by weight total solids, and have a 70° C viscosity of 18 stokes.

The pendant carboxyl groups in the prepolymer were neutralized by blending in 11 pbw of triethylamine. The mixture was dispersed by adding 440 pbw of water with vigorous stirring. The dispersion was chain-extended by adding a solution of 8 pbw of isophoronediamine in 49 pbw of water.

A film cast from the chain-extended dispersion had a tensile strength of 6900 psi at 190% elongation.

## EXAMPLE II

In a manner similar to Example I, a poly(urethane-urea) dispersion was prepared with a percentage of $H_{12}$MDI replaced by meta-tetramethylxylylenediisocyanate, commercially available from American Cyanamid Company as m-TMXDI, using a prepolymer charge as follows:

| CHARGE | PARTS BY WEIGHT |
|---|---|
| poly(1,6-hexanediol/neopentyl glycol adipate), 2000 molecular weight | 132 |
| cyclohexanedimethanol | 35 |
| dimethylofpropionic acid | 17 |
| diphenylisodecyl phosphite | 0.8 |
| N-methyl pyrrolidone | 174 |
| $H_{12}MDI$ | 113 |
| m-TMXDI | 26 |

The resulting prepolymer was determined to have 2.0% by weight unreacted NCO groups, contain 65.2% by weight total solids, and have a 70°C viscosity of 10 stokes.

The prepolymer was neutralized by blending in 12 pbw of triethylamine then dispersed by adding 472 pbw of water with vigorous stirring. The dispersion was chain-extended by adding a solution of 9 pbw of isophoronediamine in 51 pbw of water.

A film cast from the chain-extended dispersion had a tensile strength of 5700 psi at 150% elongation.

## EXAMPLE III

In a manner similar to Example I, a poly(urethane-urea) dispersion was prepared using the following prepolymer charge:

| CHARGE | PARTS BY WEIGHT |
|---|---|
| poly(1,6-hexanediol/neopentyl glycol adipate), 2000 molecular weight | 354 |
| cyclohexane dimethanol | 94 |
| dimethylol propionic acid | 48 |
| diphenylisodecyl phosphite | 2 |
| N-methyl pyrrolidone | 224 |
| $H_{12}MDI$ | 387 |

The resulting prepolymer was determined to have 2.6% by weight unreacted NCO groups, contain 80% by weight total solids, and have a 70°C viscosity of 220 stokes.

The prepolymer was neutralized by blending in 36 pbw of triethylamine then dispersed by adding 1598 pbw of water with vigorous stirring. The dispersion was chain-extended by adding a solution of 27 pbw of isophoronediamine in 178 pbw of water.

A film cast from the chain-extended dispersion had a tensile strength of 5600 psi at 160% elongation.

## EXAMPLE IV

In a manner similar to Example II, a poly(urethane-urea) dispersion was prepared with the total solids in the prepolymer increased to 80% by weight which reduced the amount of N-methyl pyrrolidone solvent from 174 pbw to 80 pbw. The reaction mixture was stirred at 100° for 2.5 hours. The resulting prepolymer was determined to have 2.6% by weight unreacted NCO groups and have a 70°C viscosity of 140 stokes.

The prepolymer was neutralized by blending in 10 pbw of triethylamine then dispersed by adding 440 pbw of water with vigorous stirring. The dispersion was chain-extended by adding a solution of 8 pbw of isophoronediamine in 49 pbw of water.

A film cast from the chain-extended dispersion had a tensile strength of 5700 psi at 180% elongation.

4

## EXAMPLE V

In a manner similar to Example II, a poly(urethane-urea) dispersion was prepared using a blend of $H_{12}$MDI and isophoronediisocyanate. The prepolymer charge was identical except that the m-TMXDI was replaced by 24 pbw of isophoronediisocyanate.

The reaction mixture was stirred at 130°C for 75 minutes. The resulting prepolymer was determined to have 1.9% by weight of unreacted NCO groups, contain 68.3% by weight total solids, and have a 70°C viscosity of 16 stokes.

The prepolymer was neutralized by blending in 12 pbw of triethylamine then dispersed by adding 450 pbw of water with vigorous stirring. The dispersion was chain-extended by adding a solution of 8 pbw of isophoronediamine in 51 pbw of water.

A film cast from the chain-extended dispersion had a tensile strength of 6900 psi at 140% elongation.

## EXAMPLE VI

In a manner similar to example IV, a poly(urethane-urea) dispersion was prepared using the following prepolymer charge:

| CHARGE | PARTS BY WEIGHT |
|---|---|
| poly(1,6-hexanediol/neopentyl glycol adipate), 2000 molecular weight | 132 |
| cyclohexanedimethanol | 35 |
| dimethylolpropionic acid | 17 |
| diphenylisodecyl phosphite | 0.8 |
| N-methyl pyrrolidone | 171 |
| $H_{12}$MDI | 85 |
| isophorone diisocyanate | 48 |

The reaction mixture was stirred at 130°C for 1.5 hours. The resulting prepolymer was determined to have 1.8% by weight unreacted NCO groups, contain 65.9% by weight total solids, and have a 70°C viscosity of 14 stokes.

The prepolymer was neutralized by blending in 12 pbw of triethylamine then dispersed by adding 437 pbw of water with vigorous stirring. The dispersion was chain-extended by adding a solution of 8 pbw of isophorone diamine in 49 pbw of water.

A film cast from the chain-extended dispersion had a tensile strength of 6500 psi at 160% elongation.

## EXAMPLE VII

A poly(urethane-urea) dispersion was prepared using the following prepolymer charge:

| CHARGE | PARTS BY WEIGHT |
|---|---|
| poly(1,6-hexanediol/neopentyl glycol adipate), 2000 molecular weight | 329 |
| cyclohexanedimethanol | 80 |
| dimethylolpropionic acid | 52 |
| diphenylisodecyl phosphite | 2 |
| N-methyl pyrrolidone | 192 |
| isophorone diisocyanate | 305 |

The reaction mixture was stirred at 90°C for 2 hours. The resulting prepolymer was determined to have 2.7% by weight unreacted NCO groups, contain 80% by weight total solids, and have a 70°C viscosity of 65 stokes.

The prepolymer was neutralized by blending in 39 pbw of triethylamine then dispersed by adding 1193 pbw of water. The dispersion was chain-extended by adding a solution of 27 pbw isophoronediamine in 133 pbw water.

A film cast from the chain-extended dispersion had a tensile strength of 4800 psi at 150% elongation.

EXAMPLE VIII

In a manner similar to Example I, a poly(urethane-urea) dispersion was prepared with a percentage of isophoronediisocyanate replaced by meta-tetramethylxylylenediisocyanate using a prepolymer charge as follows:

| CHARGE | PARTS BY WEIGHT |
|---|---|
| poly(1,6-hexanediol/neopentyl glycol adipate), 2000 molecular weight | 165 |
| cyclohexanedimethanol | 40 |
| dimethylolpropionic acid | 26 |
| diphenylisodecyl phosphite | 1 |
| N-methyl pyrrolidone | 97 |
| isophorone diisocyanate | 122 |
| m-TMXDI | 33 |

The resulting prepolymer was determined to have 2.7% by weight unreacted NCO groups, contain 80% by weight total solids, and have a 70°C viscosity of 53 stokes.

The prepolymer was neutralized by blending in 20 pbw of triethylamine then dispersed by adding 696 pbw of water. The dispersion was chain-extended by adding a solution of 13 pbw isophoronediamine in 77 pbw of water.

A film cast from the chain-extended dispersion had a tensile strength of 5800 psi at 140% elongation.

A comparison of the foregoing examples reveals that the presence of TMXDI in the diisocyanate blend gives an unexpected decrease in prepolymer viscosity. As seen in Table I, a comparison of 100% $H_{12}$MDI (Example I) with a blend of 80% $H_{12}$MDI and 20% TMXDI (example II) shows a 44% reduction in viscosity at the same 65% non-volatile (NV) concentration (18 stokes to 10 stokes). At 80% NV (Examples III and IV) there was a 36% reduction in viscosity (220 stokes to 140 stokes).

By comparison, a 80% $H_{12}$MDI, 20% IPDI blend at 68% NV (Example V) showed a viscosity of 16 stokes, only an 11% reduction from the 18 stoke viscosity of 100% $H_{12}$MDI at 65% NV (example I). Even the use of 40% IPDI at 66% NV (Example VI) only gave a 22% reduction in viscosity as compared with 100% $H_{12}$MDI. The inclusion of 40% IPDI in the isocyanate blend was therefore only about half as effective in reducing viscosity as the use of only 20% TMXDI in the isocyanate blend.

As can be seen from a comparison of Example VII and VIII, the use of TMXDI in a blend to reduce viscosity surprisingly reduced the viscosity of even a prepolymer formed using IPDI alone.

6

TABLE I

| # | Diisocyanate Blend | | | NV | Prepolymer Viscosity, 70° C |
|---|---|---|---|---|---|
| | %H$_{12}$MDI | %IPDI | %TMXDI | | |
| I | 100 | 0 | 0 | 65 | 18 stokes |
| II | 80 | 0 | 20 | 65 | 10 stokes |
| III | 100 | 0 | 0 | 80 | 220 stokes |
| IV | 80 | 0 | 20 | 80 | 140 stokes |
| V | 80 | 20 | 0 | 68 | 16 stokes |
| VI | 60 | 40 | 0 | 66 | 14 stokes |
| VII | 0 | 100 | 0 | 80 | 65 stokes |
| VIII | 0 | 80 | 20 | 80 | 53 stokes |

**Claims**

1. A water dispersible urethane prepolymer composition comprising a polyol chain including hydrophylic groups, said chain being extended by reaction with a blend of at least two isocyanates, said blend comprising at least five weight percent tetramethylxylylenediisocyanate.

2. A water dispersible urethane prepolymer composition comprising a polyol chain including hydrophylic groups, said chain being extended by reaction with a blend of at least two isocyanates, said blend comprising at least ten weight percent tetramethylxylylenediisocyanate.

3. The prepolymer of Claim 2 wherein the hydrophylic groups are neutralized or unneutralized carboxy groups.

4. The prepolymer of Claim 2 wherein the blend further comprises at least fifty weight percent of an isocyanate selected from the group consisting of bis(4-isocyanato-cyclohexyl) methane, isophorone diisocyanate and mixtures thereof.

5. The prepolymer of Claim 1 wherein said blend consists essentially of from five to fifty weight percent tetramethylxylylenediisocyanate and from fifty to ninety-five weight percent bis(4-isocyanate-cyclohexyl) methane.

6. A resin product comprising the cured composition of one of the Claims 1 to 5.

7. A coating comprising the cured composition of one of the Claims 1 to 5.

8. An aqueous resin dispersion comprising the resin of one of the Claims 1 to 5 dispersed in water.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 242 731 (BAYER)<br>* Claims 1,4; page 4, lines 16-40; page 5, lines 1-37 *<br>----- | 1 | C 08 G 18/72<br>C 08 G 18/76<br>C 08 G 18/08<br>C 08 G 18/12<br>C 09 D 175/04 |

TECHNICAL FIELDS
SEARCHED (Int. Cl.5)

C 08 G

The present search report has been drawn up for all claims

| Place of search | Date of completion of the search | Examiner |
|---|---|---|
| THE HAGUE | 15-02-1990 | VAN PUYMBROECK M.A. |